(19) **Europäisches Patentamt**

**European Patent Office**

**Office européen des brevets**

(11) **EP 0 867 959 B1**

(12) **EUROPEAN PATENT SPECIFICATION**

(45) Date of publication and mention
of the grant of the patent:
**28.01.2004 Bulletin 2004/05**

(51) Int Cl.$^7$: **H01M 4/52**

(21) Application number: **98301976.1**

(22) Date of filing: **17.03.1998**

(54) **Secondary battery and its manufacturing method**

Sekundärbatterie und Herstellungsverfahren

Pile secondaire et sa méthode de fabrication

(84) Designated Contracting States:
**DE FR GB**

(30) Priority: **27.03.1997 JP 7539997**

(43) Date of publication of application:
**30.09.1998 Bulletin 1998/40**

(73) Proprietor: **MATSUSHITA ELECTRIC INDUSTRIAL CO., LTD.**
**Kadoma-shi, Osaka 571-0050 (JP)**

(72) Inventors:
• **Hayashi, Kiyoshi**
**Toyohashi-shi, Aichi, 441 (JP)**
• **Tomioka, Katsuyuki**
**Toyohashi-shi, Aichi, 441 (JP)**
• **Morishita, Nobuyasu**
**Toyohashi-shi, Aichi, 441 (JP)**

• **Ikoma, Munehisa**
**Toyohashi-shi, Aichi, 440 (JP)**

(74) Representative: **Crawford, Andrew Birkby et al**
**A.A. Thornton & Co.**
**235 High Holborn**
**London WC1V 7LE (GB)**

(56) References cited:
**EP-A- 0 649 818**     **US-A- 5 244 758**
**US-A- 5 498 403**

• **BERNARD M C ET AL: "Structural defects and electrochemical reactivity of beta-Ni (OH)2" JOURNAL OF POWER SOURCES,CH,ELSEVIER SEQUOIA S.A. LAUSANNE, vol. 63, no. 2, 1 December 1996 (1996-12-01), pages 247-254, XP004059412 ISSN: 0378-7753**

**Description**

FIELD OF THE INVENTION

The present invention relates to an active material of nickel electrode used in secondary battery such as nickel-hydrogen storage battery or nickel-cadmium storage battery, and a nickel positive electrode for alkaline storage battery . using the same.

BACKGROUND OF THE INVENTION

In the recent prevailing trend of mobile telephones, personal handy-phone system, notebook type computers, other portable appliances, and devices generating high temperature, there is a mounting demand for secondary batteries small in size, light in weight, having high energy density of high added value, and excellent in various battery characteristics in high temperature atmosphere. Also as the power source for electric vehicle, development of new secondary battery having a high energy density is desired. Such secondary battery can be used in an atmosphere of wire temperature range.

To meet such demands, in the field of nickel-cadmium battery, the conventional nickel-cadmium battery using sintered nickel positive electrode is being enhanced in capacity. A new nickel-cadmium battery of high energy density is also developed by using nickel positive electrode in which foamed metal higher in capacity by 30 to 60% than sintered nickel as the substrate. Moreover, a nickel-hydrogen storage battery using hydrogen storage material as negative electrode is developed. This nickel-hydrogen storage battery has a high capacity more than two times that of the nickel-cadmium battery using sintered nickel positive electrode.

In these alkaline storage batteries of high capacity, in order to enhance the energy density of the positive electrode, the sintered nickel porous element, three-dimensional foamed nickel porous element having high porosity (90% or more), and nickel fiber porous element are filled with nickel hydroxide powder at high density. As a result, as compared with the energy density of the conventional sintered nickel positive electrode of 400 to 450 mAh/cm$^3$, the energy density of the recent sintered nickel positive electrode is improved to 450 to 500 mAh/cm$^3$, and the energy density of foamed metal nickel positive electrode is 550 to 650 mAh/cm$^3$.

These nickel positive electrodes, however, had a common problem, that is, the energy density is lowered in high temperature atmosphere as compared with the energy density around ordinary temperature. The cause is that oxygen evolving reaction is likely to occur simultaneously with the reaction of charging of nickel hydroxide in nickel oxyhydroxide, in the process of charging in high temperature atmosphere. More specifically, by the oxygen evolving reaction in the positive electrode, nickel hydroxide is not sufficiently charged into nickel oxyhydroxide, and the utility rate of nickel hydroxide is lowered.

To solve this problem, the following methods had been proposed.

(1) A method of adding cadmium oxide powder or cadmium hydroxide powder in the positive electrode.
(2) A method of containing cadmium oxide in nickel hydroxide powder (Japanese Laid-open Patent No. 61-104565).
(3) A method of containing a compound having yttrium, indium, antimony, barium or beryllium in the positive electrode (Japanese Laid-open Patent No. 4-248973).
(4) A method of using nickel hydroxide powder of which peak strength of (001) plane to the peak strength of (101) plane in X-ray diffraction is in a range of 1. 0 to 1. 3, and full width of half maximum intensity (FWHM) of (101) plane is in a range of 0.8 to 1. 1 degree (Japanese Laid-open Patent No. 7-94182).

In the hitherto proposed methods (1) and (2), the utility rate of nickel hydroxide in high temperature atmosphere is enhanced by the cadmium oxide existing inside of the nickel hydroxide powder or together with nickel hydroxide powder. However, even by adding cadmium oxide, the utility rate of nickel hydroxide in high temperature atmosphere is about 80%, and to further increase the utility rate of nickel hydroxide in high temperature atmosphere, it is necessary to increase the amount of cadmium added in the nickel hydroxide or nickel positive electrode. On the other hand, when the addition of cadmium oxide is increased, the utility rate of nickel hydroxide in high temperature atmosphere can be improved to about 90%, but, to the contrary, the utility rate of nickel hydroxide around ordinary temperature is lowered.

Also, from the viewpoint of the recent environmental problem, the nickel-hydrogen storage battery free from cadmium which is a heavy metal is attracting attention. However, by removing cadmium oxide from the positive electrode of nickel hydroxide or the like, the utility rate of nickel hydroxide in high temperature atmosphere is lowered to about 50 to about 60%, and when the enclosed nickel-hydrogen storage battery of low electrolyte level is composed in this state, the cycle life is very short.

In the method of (3), a compound of yttrium, indium, antimony or other is adhered on the surface of the nickel oxide which is an active material, the overvoltage of evolving oxygen which is a competitive reaction during charging in high temperature atmosphere is increased, and the charging efficiency of nickel hydroxide into nickel oxyhydroxide is enhanced, and hence it is expected to improve the utility rate in the high temperature atmosphere. By applying this method alone, however, the distribution state of the additive in the paste was not uniform or dissolution was not enough, and expected effects were not obtained sufficiently, and a huge amount of additives was needed to obtain a marked effect. Thus, same as in the case of cadmium oxide, it was hindrance to increase of battery capacity.

The method of (4) is improvement of the nickel hydroxide powder itself. This method is to use nickel hydroxide powder of which peak strength of (001) plane to the peak strength of (101) plane in X-ray diffraction is in a range of 1.0 to 1.3, and full width of half maximum intensity of (101) plane is in a range of 0. 8 to 1. 1 degree. By using $Na_2CO_3$ in the material, however, carbonate radicals are massively left over in t he nickel hydroxide, and the internal impedance may be raised by repeating charge-discharge cycles, and the cycle life may be extremely shortened.

It is hence an object of the invention to obtain an active material for nickel electrode having effects of obtaining a high capacity in a wide temperature range and extending the repeating life of charge and discharge.

SUMMARY OF THE INVENTION (DISCLOSURE OF THE INVENTION)

The secondary battery of the invention comprises a nickel positive electrode, a negative electrode, and an electrolyte material, in which the nickel positive electrode contains nickel hydroxide powder having crystallinity of which full width of half maximum intensity of (001) plane in X-ray diffraction peak is 0.69 degree or less, and the nickel hydroxide powder has crystallinity, with the value of "peak strength/full width of half maximum intensity" of the (001) plane being 9,500 or more.

Preferably, the nickel positive electrode comprises (a) at least one selected from the group consisting of cobalt, cadmium, zinc and magnesium incorporated in the nickel hydroxide powder, and (b) the nickel hydroxide powder.

Preferably, the nickel positive electrode comprises (a) at least one selected from the group consisting of yttrium, ytterbium, erbium, indium, antimony, barium, calcium, and beryllium, and (b) the nickel hydroxide powder.

Preferably, the nickel positive electrode comprises a conductive support, and the nickel hydroxide powder supported on the support.

The manufacturing method of nickel positive electrode for secondary battery of the invention comprises the steps of (a) preparing nickel hydroxide powder having crystallinity of which full width of half maximum intensity of (001) plane in X-ray diffraction peak is 0.69 degree or less, wherein the nickel hydroxide powder has crystallinity, with the value of "peak strength/full width of half maximum intensity of the (001) plane being 9,500 or more. (b) preparing paste containing the nickel hydroxide powder and solvent, (c) supporting the paste on a conductive support, and (d) drying the paste supported on the support

Preferably, the step of preparing nickel hydroxide powder includes a step of mixing nickel sulfate aqueous solution, ammonia, and pH regulating agent.

Preferably, the paste in the step of preparing paste further contains at least one selected from the group consisting of cobalt, cadmium, zinc and magnesium.

Preferably, the paste in the step of preparing paste further contains at least one selected from the group consisting of cobalt hydroxide, cadmium hydroxide, zinc hydroxide, magnesium hydroxide, cobalt oxide, cadmium oxide, zinc oxide, and magnesium oxide.

Preferably, the paste further contains at least one selected from the group consisting of yttrium compound, ytterbium compound, erbium compound, indium compound, antimony compound, barium compound, calcium compound, and beryllium compound.

In this constitution, a high capacity is obtained in a wide temperature range. In particular, the battery capacity increases at high temperature in a range of about 45°C to about 60°C. Further, the cycle life of discharge and charge is notably extended in a wide temperature range.

BRIEF DESCRIPTION OF THE DRAWINGS

Fig. 1 is a model diagram of crystal structure of nickel hydroxide in an embodiment of the invention.
Fig. 2 is a diagram showing chart of measurement of X-ray diffraction of nickel hydroxide in an embodiment of the invention.
Fig. 3 is a sectional view of a battery manufactured by using a positive electrode according to an embodiment of the invention.
Fig. 4 is a flowchart showing a manufacturing method in an embodiment of a nickel positive electrode used in the secondary battery of the invention.

REFERENCE NUMERALS

1    Negative electrode
2    Positive electrode
3    Separator
4    Case
5    Terminal
6    Safety valve
7    Sealing plate
8    Insulating gasket
9    Substrate of positive electrode

DETAILED DESCRIPTION OF THE INVENTION

The present invention is devised by paying attention to the crystallinity of nickel hydroxide powder which is an active material used in a positive electrode of a battery, and discovering the correlation between the full width of half maximum intensity and peak strength in diffraction line of (001) plane particularly in measurement of X-ray diffraction. By using nickel hydroxide powder having a special crystallinity, the capacity of the secondary battery is enhanced in a wide temperature range, and the life is extended.

That is, as the positive electrode active material of battery, nickel hydroxyl powder of which full width of half maximum intensity of (001) plane in X-ray diffraction peak is 0.69 degree or less, and peak strength/full width of half maximum intensity of the (001) plane is 9,500 or more is used. The above effects are exhibited more extremely by using the positive electrode active material incorporating at least one selected from the group consisting of cobalt, cadmium, zinc and magnesium in the nickel hydroxide powder. When the nickel positive electrode for alkaline battery is fabricated by using nickel hydroxide having such characteristics, by containing a compound of at least one element selected from the group consisting of yttrium, ytterbium, erbium, indium, antimony, barium, calcium, and beryllium, the charging efficiency in high temperature atmosphere is further enhanced. As a result, an alkaline storage battery of high performance usable in a wide range of high temperature atmosphere can be presented.

Herein, as the compound of yttrium, ytterbium, erbium, indium, antimony, barium, calcium, and beryllium, oxide, hydroxide, and various salts can be used.

In the invention, sodium hydroxide powder is particularly preferred to have crystallinity, with full width of half maximum intensity of (001) plane in X-ray diffraction peak of 0.65 degree or less, and the value of (peak strength/full width of half maximum intensity) of the (001) plane of 10,000 or more

If the full width of half maximum intensity of (001) plane is more than 0.70 degree, the effects are small. If the value of (peak strength/full width of half maximum intensity) is less than 9,500, the effects are small.

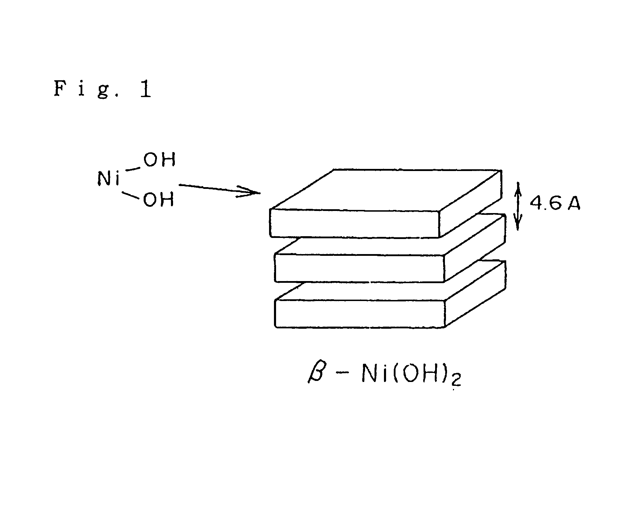

Fig. 1 is a model diagram of crystal structure of nickel hydroxide powder as an example of active material for nickel electrode of the invention.

The nickel hydroxide shown in Fig. 1 is $\beta$-Ni(OH)$_2$.

In X-ray diffraction of crystal of nickel hydroxide powder, the full width of half maximum intensity of (001) plane is 0.69 degree or less, or is particularly preferred to be 0.65 degree or less. The value of (peak strength/full width of half maximum intensity) is 9,500 or more, or is particularly preferred to be 10,000 or more. The crystallinity in the direction of (001) plane, crystal growth, and crystal uniformity of nickel hydroxide powder are excellent.

The nickel hydroxide having such characteristics is small in disturbance of crystals, and is enhanced in the conductivity of the crystals. Moreover, since the crystal disturbance is small, the reaction from nickel hydroxide to nickel oxyhydroxide as shown in formula (1) occurs uniformly.

The reaction in formula (1) is a charge reaction of battery, and this reaction in formula (1) has an effect on the charging efficiency in high temperature atmosphere.

$$Ni(OH)_2 + OH^- \rightarrow NiOOH + H_2O + e^- \tag{1}$$

$$2OH^- \rightarrow 1/2O_2 + H_2O + e^- \tag{2}$$

Generally, the charging reaction shown in formula (1) and competitive reaction shown in formula (2) occur.

The competitive reaction shown in formula (2) is a reaction for generating oxygen, and it is preferred that the reaction of formula (2) may not occur. In particular, by enhancing the conductivity of nickel hydroxide and by making uniform the charging reaction, the competitive reaction in formula (2) may be suppressed, and hence the charging efficiency is improved. Moreover, by uniform charge-discharge reaction, formation of nickel oxyhydroxide of $\gamma$-type due to over-charge of active material is suppressed, swelling of active material or the like is inhibited, so that the battery life characteristic may be enhanced.

In the battery using positive electrode active material incorporating at least one selected from the group consisting of cobalt, cadmium, zinc and magnesium in the nickel hydroxide powder having such crystallinity, or the positive electrode active material containing a compound of at least one element selected from the group consisting of yttrium, ytterbium, erbium, indium, antimony, barium, calcium, and beryllium in the positive electrode paste, by the effects of the individual materials and synergistic effects, the oxygen generating overvoltage is elevated, the oxygen generating reaction is suppressed, and the charging efficiency in high temperature atmosphere is further enhanced. Thus, by combining the nickel hydroxide having such crystallinity with various additives, an alkaline storage batter of long life usable in a wide temperature range can be presented.

EMBODIMENTS

Embodiments of the secondary battery of the invention are described below.

(Embodiment 1)

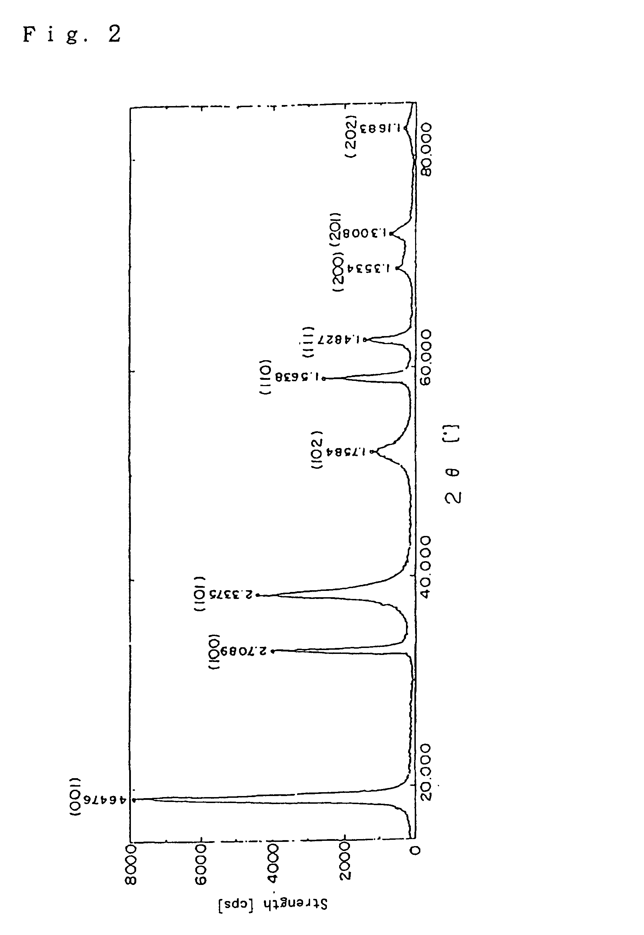

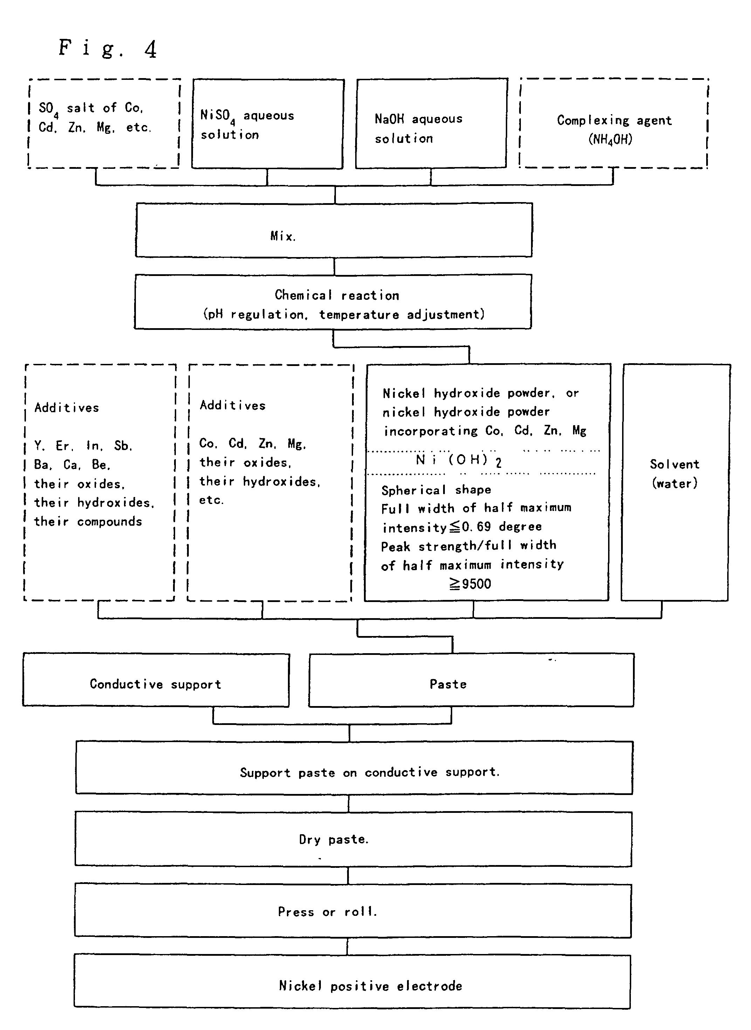

An outline of manufacturing method of nickel positive electrode used in the secondary batter of the embodiment is shown in Fig. 4. The nickel hydroxide used in the embodiment was prepared by mixing nickel sulfate aqueous solution and sodium hydroxide aqueous solution. To stabilize metal ions such as nickel ions, ammonia was added as a complexing agent. The prepared nickel hydroxide was treated in sodium hydroxide aqueous solution, and impurities such s sulfate ions in the nickel hydroxide were removed, washed in water and dried. The mean particle size of thus obtained nickel hydroxide powder was about 10 μm in spherical form. To control the crystallinity of nickel hydroxide, various compounds of nickel hydroxide were prepared by varying the concentration of material solution, blending ratio, ammonia content, temperature, and pH. Table 1 shows the values of full width of half maximum intensity and peak strength of the obtained nickel hydroxide compounds by X-ray diffraction measurement. In X-ray diffraction measurement, Rigaku Denki Geiger Flex RAD-IIIA was used, the tube voltage was 40 kV, the tube current was 40 mA, and the slit t DS/SS was 1 degree, the RS was 0.3 mm, and the target/monochromator was Cu/C. Fig. 2 shows an example of chart of result of X-ray diffraction measurement. Properties of sodium hydroxide compounds are shown in Table 1. Herein, DS is the divergence slit, SS is the scatter slit, and RS is the receiving slit.

Table 1.

| No. | Full width of half maximum intensity of (001) plane, deg. | Peak strength/full width of half maximum intensity of (001) plane |
|---|---|---|
| | Properties of nickel hydroxide compounds. | |
| 1 | 0.70 | 9000 |
| 2 | 0.70 | 10000 |
| 3 | 0.65 | 9000 |
| 4 | 0.65 | 10000 |
| 5 | 0.65 | 11000 |
| 6 | 0.60 | 9000 |

The nickel positive electrode using nickel hydroxide powder of the embodiment was prepared as follows. Thus prepared nickel hydroxide powder, cobalt powder, cobalt hydroxide powder, and zinc oxide powder were blended in a composition of 100:7:5:3 by weight. Water was added to the mixture to knead into paste. This paste was applied to fill up a foamed nickel porous element with porosity of 95% and surface density of 300 g/cm$^2$ used as conductive support. It was then dried. By pressurizing or rolling, a sheet was obtained. It was then cut into specified dimensions (thickness: 0.5 mm, width: 35 mm, length: 110 mm), and various nickel positive electrodes with theoretical capacity of 1000 mAh were prepared. As the support, the foamed nickel porous element is prepared, but not limited to this, other conductive base material may be also used.

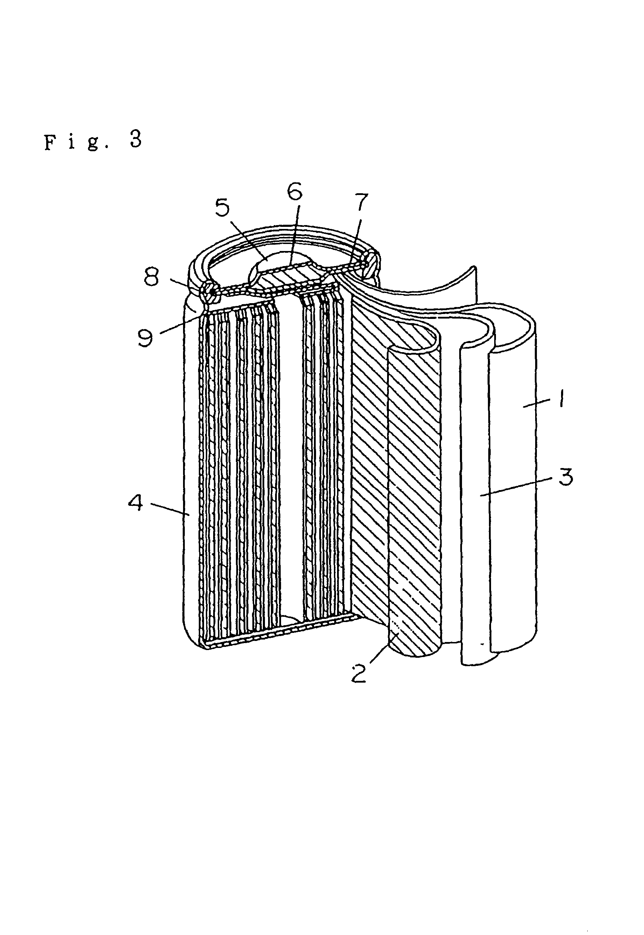

Using thus prepared positive electrodes, enclosed nickel-hydrogen batteries of AA size having theoretical capacity of 1000 mAh with the battery capacity defined by the positive electrode were fabricated. The structure of the fabricated battery is shown in Fig. 3.

In Fig. 3, a negative electrode 1 was hydrogen storage material ($MmNi_{3.6}Co_{0.7}Mn_{0.4}Al_{0.3}$, Mm: micsh metal). A nickel mischmetal positive electrode 2 was an active material prepared as mentioned above. These sheets of negative electrode 1 and nickel positive electrode 2 were spirally wound through a sulfonated polypropylene separator, and inserted into a case 4 serving also as a negative electrode terminal. Then, 2.0 $cm^3$ of alkaline electrolyte dissolving 20 g/liter of lithium hydroxide in potassium hydroxide aqueous solution with specific gravity of 1.3 was poured into the case 4. A sealing plate 7 having a safety valve 6 was applied to seal the opening of the case 4 through an insulating gasket 8. The positive electrode 2 and sealing plate 7 are mutually connected electrically through a substrate of positive electrode 9, and a terminal 5 of positive electrode is formed in the sealing plate 7.

Various batteries were manufactured by using the positive electrodes made of nickel hydroxide compounds in Table 1, and the utility rate of the positive electrode active material was investigated. In the temperature atmosphere at 25°C, 35°C, 45°C, and 55°C, the battery was charged for 15 hours at charging rate of 0.1C. Then the battery was let stand for 3 hours in 25 °C temperature atmosphere. Consequently, the battery was discharged until 1.0 V at discharge rate of 0.2C in 25 °C temperature atmosphere. Table 2 shows the discharge capacity at the second cycle in each temperature atmosphere of the batteries charged and discharged in the above condition.

Table 2.

| Discharge capacity in 25°C temperature environment by charging at various temperatures | | | | |
|---|---|---|---|---|
| No. | 25°C mAh | 35°C mAh | 45°C mAh | 55°C mAh |
| 1 | 960 | 940 | 450 | 280 |
| 2 | 955 | 935 | 445 | 275 |
| 3 | 965 | 945 | 445 | 270 |
| 4 | 960 | 945 | 580 | 480 |
| 5 | 970 | 945 | 585 | 490 |
| 6 | 960 | 940 | 455 | 300 |

As shown in Table 2, in the batteries (sample.Nos. 1, 2, 3, 6 in Table 2) using nickel hydroxide of which full width of half maximum intensity of (001) plane is 0.7 degree or more and value of (peak strength/full width of half maximum intensity) of (001) plane is 10,000 or less, the discharge capacity is lowered in high temperature atmosphere, in particular, in 45°C and higher temperature atmosphere. By contrast, in the batteries (sample Nos. 4, 5 in Table 2) using nickel hydroxide of which full width of half maximum intensity of (001) plane is 0.65 degree or less and value of (peak strength/full width of half maximum intensity) of (001) plane is more than 10,000, lowering of capacity in high temperature atmosphere is small.

Next, in each temperature atmosphere of 25°C, 35°C, 45°C, and 55 °C, the batteries were charged for 1. 3 hours at charging rate of 1C and discharged until 1.0 V thereafter at discharging rate of 1C. Repeating such charging and discharging, it is judged as the end of battery life when the initial discharge capacity deteriorated 40%. Results of examining the cycle life are summarized in Table 3.

Table 3.

| Cycle life test at each temperature | | | | |
|---|---|---|---|---|
| No. | 25°C cycles | 35°C cycles | 45°C cycles | 55°C cycles |
| 1 | 550 | 530 | 500 | 400 |
| 2 | 540 | 525 | 495 | 395 |
| 3 | 545 | 540 | 505 | 400 |
| 4 | 750 | 745 | 720 | 695 |
| 5 | 740 | 740 | 705 | 690 |
| 6 | 580 | 585 | 555 | 450 |

As shown in Table 3, in samples (Nos. 3, 4, 5, 6) with full width of half maximum intensity of (001) plane of 0.69 degree or less, deterioration at high temperature is less as compared wi th samples (Nos. 1, 2) of 0. 70 degree or more. In samples (Nos. 4, 5) with the value of "peak strength/full width of half maximum intensity" of (001) plane of 9,500 or more, in particular, the cycle life is improved in all temperature atmosphere, and the charge-discharge reaction is uniform.

Thus, in the batteries using nickel hydroxide powder of which full width of half maximum intensity of (001) plane is 0.69 degree or more, the life in high temperature atmosphere is extended. Furthermore, by the use of nickel hydroxide having crystallinity with full width of half maximum intensity of (001) plane of 0.69 degree or less and value of "peak strength/full width of half maximum intensity" of (001) plane of 9,500 or more, batteries smaller in lowering of capacity in high temperature atmosphere and longer in repeating life of charge and discharge are obtained.

In particular, it is preferred to use nickel hydroxide having crystallinity with full width of half maximum intensity of (001) plane of 0.65 degree or less and value of "peak strength/full width of half maximum intensity" of (001) plane of 10, 000 or more.

Yet, the same excellent effects are also obtained even in the batteries not containing other additives as in the embodiment. That is, in the composition of the electrode, the rate of content of nickel hydroxide equivalent to the saving amount of additives may be increased, so that the above effects are further enhanced.

(Embodiment 2)

In spherical nickel hydroxide powder (Co/Zn = 1.5/4) incorporating cobalt and zinc in nickel hydroxide, various additives as shown in Table 4 were added, and nickel hydroxide powder, cobalt powder, cobalt hydroxide powder, zinc oxide powder, and additives were blended at a rate of 100:7:5:3:1 by weight. Using these materials, positive electrodes were prepared in the same procedure as in embodiment 1. Using these positive electrodes, various batteries were manufactured, and tested same as in embodiment 1. Herein, the full width of half maximum intensity of (001) plane of nickel hydroxide in X-ray diffraction measurement was 0.65 degree, and the peak strength/full width of half maximum intensity was 11,000. Test results of batteries using various positive electrodes are summarized in Table 4.

Table 4.

| Discharge capacity in 25°C temperature environment when charged at each temperature with or without additives. | | | | | |
|---|---|---|---|---|---|
| No. | Additive | 25°C mAh | 35°C mAh | 45°C mAh | 55°C mAh |
| 7 | None | 970 | 945 | 585 | 490 |
| 8 | $Y_2O_3$ | 965 | 945 | 900 | 850 |
| 9 | $Y(OH)_3$ | 970 | 955 | 905 | 840 |
| 10 | $Yb_2O_3$ | 960 | 950 | 895 | 845 |
| 11 | $Er_2O_3$ | 965 | 940 | 900 | 840 |
| 12 | $In_2O_3$ | 970 | 945 | 895 | 835 |
| 13 | $Sb_2O_4$ | 965 | 950 | 905 | 840 |
| 14 | $BaSO_4$ | 970 | 950 | 900 | 835 |
| 15 | $Ca(OH)_2$ | 970 | 955 | 895 | 835 |
| 16 | BeO | 965 | 945 | 900 | 825 |

As shown in Table 4, in the batteries using positive plate active material adding $Y_2O_3$, $Y(OH)_3$, $Er_2O_3$, $In_2O_3$, $Sb_2O_3$, $BaSO_4$, $Ca(OH)_2$, and BeO to sodium hydroxide as compound of yttrium, ytterbium, erbium, indium, antimony, barium, calcium, and beryllium, respectively, it is found that the capacity in 45°C and higher temperature atmosphere can be increased.

Next, in each temperature atmosphere of 25°C, 35°C, 45°C, and 55 °C, the batteries were charged for 1. 3 hours at charging rate of 1C and discharged until 1.0 V thereafter at discharging rate of 1C. Repeating such charging and discharging, it is judged as the end of battery life when the initial discharge capacity deteriorated 40%. Results of examining the cycle life are summarized in Table 5.

Table 5.

| Cycle life test in 25 deg. temperature atmosphere when charged at each temperature with additives | | | | |
|---|---|---|---|---|
| No. | 25°C cycles | 35°C cycles | 45°C cycles | 55°C cycles |
| 7 | 740 | 740 | 705 | 690 |
| 8 | 880 | 860 | 800 | 780 |
| 9 | 870 | 855 | 795 | 775 |
| 10 | 875 | 860 | 800 | 760 |
| 11 | 880 | 870 | 805 | 775 |
| 12 | 900 | 880 | 810 | 765 |
| 13 | 890 | 870 | 800 | 780 |
| 14 | 885 | 875 | 795 | 755 |
| 15 | 875 | 860 | 805 | 765 |
| 16 | 890 | 875 | 800 | 770 |

As shown in Table 5, in all battery samples, the cycle life is improved in all temperature atmosphere ranging from 25°C to 55°C, and the charge-discharge reaction is uniform.

Thus, by using the positive electrode active material containing nickel hydroxide having specified crystallinity and additives, long-life batteries stable in capacity in a wide temperature range can be manufactured.

In the embodiment, the nickel hydroxide incorporating cobalt and zinc was used, but same effects were obtained in the batteries using nickel hydroxide incorporating cadmium and magnesium. Besides, as the additives, $Y_2O_3$, $Y(OH)_3$, $Er_2O_3$, $In_2O_3$, $Sb_2O_3$, $BaSO_4$, $Ca(OH)_2$, and BeO were used, but same effects were obtained in the batteries using other compounds of yttrium, ytterbium, erbium, indium, antimony, barium, calcium, and beryllium.

The nickel hydroxide incorporating cobalt, cadmium, zinc or magnesium is manufactured by adding their $SO_4$ salt in the process of mixing $NiSO_4$ aqueous solution and NaOH aqueous solution.

Thus, according to the constitution of the invention, a high capacity is obtained in a wide temperature range, and the cycle life of charge and discharge is extended, and the nickel electrode active material for alkaline storage battery having such excellent performances, the positive electrode using the same, and the secondary battery using the same are obtained.

Moreover, by using a special nickel hydroxide powder of the invention, the same excellent effects are obtained even in the electrode not containing additives, and hence in the composition of the active material, the content of the nickel hydroxide can be increased by the portion equivalent to the saving amount of the additives, so that the effects are further enhanced.

## Claims

1.  A secondary battery comprising:

     a nickel positive electrode, a negative electrode, and an electrolyte material,

     wherein the nickel positive electrode contains nickel hydroxide powder having crystallinity of which full width of half maximum intensity of (001) plane in X-ray diffraction peak is 0.69 degree or less, and the nickel hydroxide powder has crystallinity, with the value of "peak strength/full width of half maximum intensity" of said (001) plane being 9,500 or more.

2.  A secondary battery according to claim 1 wherein said nickel hydroxide powder is nearly spherical in shape.

3.  A secondary battery according to claim 1, wherein said nickel positive electrode comprises:

     (a) said nickel hydroxide powder, and
     (b) at least one selected from the group consisting of cobalt, cadmium, zinc and magnesium incorporated in said nickel hydroxide powder.

4. A secondary battery according to claim 1, wherein said nickel positive electrode comprises:

   (a) said nickel hydroxide powder, and
   (b) at least one selected from the group consisting of yttrium, ytterbium, erbium, indium, antimony, barium, calcium, and beryllium.

5. A secondary battery according to claim 1, wherein said nickel positive electrode comprises:

   (a) said nickel hydroxide powder,
   (b) at least one selected from the group consisting of cobalt, cadmium, zinc and magnesium incorporated in said nickel hydroxide powder, and
   (c) at least one selected from the group consisting of yttrium, ytterbium, erbium, indium, antimony, barium, calcium, and beryllium.

6. A secondary battery according to claim 1, wherein said nickel positive electrode comprises a conductive support, and said nickel hydroxide powder supported on said support.

7. A secondary battery according to claim 6, wherein said nickel positive electrode is manufactured by adhering paste containing said nickel hydroxide powder and solvent to said support, and drying said adhered paste.

8. A secondary battery according to claim 7, wherein said paste contains at least one selected from the group consisting of cobalt, cadmium, zinc and magnesium incorporated in said nickel hydroxide powder.

9. A secondary battery according to claim 7, wherein said paste further contains at least one selected from the group consisting of yttrium, ytterbium, erbium, indium, antimony, barium, calcium, and beryllium.

10. A secondary battery according to claim 7, wherein said support is a foamed nickel having multiple pores, and said multiple pores of said foamed nickel are filled with said nickel hydroxide powder.

11. A secondary battery according to claim 1, wherein said negative electrode is a hydrogen storage material.

12. A secondary battery according to claim 1, wherein said electrolyte material is an alkaline electrolyte.

13. A manufacturing method of nickel positive electrode for secondary battery comprising the steps of:

    (a) preparing nickel hydroxide powder having crystallinity of which full width of half maximum intensity of (001) plane in X-ray diffraction peak is 0.69 degree or less, wherein said nickel hydroxide powder has crystallinity, with the value of "peak strength/full width of half maximum intensity" of said (001) plane being 9,500 or more,

    (b) preparing paste containing said nickel hydroxide powder and solvent,

    (c) supporting said paste on a conductive support, and

    (d) drying said paste supported on said support.

14. A manufacturing method of nickel positive electrode for secondary battery of claim 13, wherein said step of preparing nickel hydroxide powder includes a step of mixing nickel sulfate aqueous solution, sodium hydroxide aqueous solution, and ammonia.

15. A manufacturing method of nickel positive electrode for secondary battery according to claim 13, wherein said step of preparing nickel hydroxide powder includes a step of mixing (a) nickel sulfate aqueous solution, (b) sodium hydroxide aqueous solution, and (c) at least one sulfate selected from the group consisting of cobalt, cadmium, zinc and magnesium.

16. A manufacturing method of nickel positive electrode for secondary battery according to claim 13, wherein said paste in said step of preparing paste further contains at least one selected from the group consisting of cobalt, calcium, zinc and magnesium.

17. A manufacturing method of nickel positive electrode for secondary battery according to claim 13, wherein said paste in said step of preparing paste further contains at least one selected from the group consisting of cobalt hydroxide, cadmium hydroxide, zinc hydroxide, magnesium hydroxide, cobalt oxide, cadmium oxide, zinc oxide, and magnesium oxide.

18. A manufacturing method of nickel positive electrode for secondary battery according to claim 13, wherein said paste further contains at least one selected from the group consisting of yttrium compound, ytterbium compound, erbium compound, indium compound, antimony compound, barium compound, calcium compound, and beryllium compound.

19. A manufacturing method of nickel positive electrode for secondary battery according to claim 13, wherein said paste in said step of preparing paste further contains at least one selected from the group consisting of $Y_2O_3$, $Y(OH)_3$, $Er_2O_3$, $IN_2O_3$, $Sb_2O_3$, $BaSO_4$, $CaOH_2$, and BeO.

20. A manufacturing method of nickel positive electrode for secondary battery according to claim 13, wherein at said step (c), said support is a foamed nickel having multiple pores, and said pores of said foamed nickel are filled with said paste.

**Patentansprüche**

1. Eine Sekundärbatterie, welche das Folgende umfasst:-

   eine nickelpositive Elektrode, eine negative Elektrode, und ein Elektrolytmaterial, wobei die nickelpositive Elektrode ein Nickelhydroxidpulver beinhaltet, welche über eine Kristallinität verfügt, deren vollständige Breite der halben Maximalintensität der (001) Ebene der Röntgendiffraktionsspitze 0.69 Grad oder weniger beträgt, und wobei das Nikkelhydroxidpulver über eine Kristallinität verfügt, deren "Spitzenstärkenwert/vollständige Breite der halbem Maximalintensität" der vorgenannten (001) Ebene 9,500 oder mehr beträgt.

2. Eine Sekundärbatterie nach Anspruch 1, bei welcher das vorgenannte Nickelhydroxidpulver eine beinahe sphärische Form annimmt.

3. Eine Sekundärbatterie nach Anspruch 1, bei welcher die vorgenannte nickelpositive Elektrode das Folgende umfasst:

   (a) das vorgenannte Nickelhydroxidpulver, und
   (b) mindestens ein Material aus einer Gruppe, welche Kobalt, Kadmium, Zink und Magnesium innerhalb des vorgenannten Nickelhydroxidpulvers umfasst.

4. Eine Sekundärbatterie nach Anspruch 1, bei welcher die vorgenannte nickelpositive Elektrode das Folgende umfasst:

   (a) das vorgenannte Nickelhydroxidpulver, und
   (b) mindestens ein Material aus einer Gruppe, welche Yttrium, Ytterbium, Erbium, Indium, Antimon, Barium, Kalzium, und Beryllium umfasst.

5. Eine Sekundärbatterie nach Anspruch 1, bei welcher die vorgenannte nickelpositive Elektrode das Folgende umfasst:

   (a) das vorgenannte Nickelhydroxidpulver,
   (b) mindestens ein Material aus einer Gruppe, welche Kobalt, Kadmium, Zink und Magnesium innerhalb des vorgenannten Nickelhydroxidpulvers umfasst, und
   (c) mindestens ein Material aus einer Gruppe, welche Yttrium, Ytterbium, Erbium, Indium, Antimon, Barium, Kalzium, und Beryllium umfasst.

6. Eine Sekundärbatterie nach Anspruch 1, bei welcher die vorgenannte nickelpositive Elektrode eine leitfähigen Stütze umfasst, und wobei das vorgenannte Nickelhydroxidpulver von dieser vorgenannten Stütze gehalten wird.

7. Eine Sekundärbatterie nach Anspruch 6, bei welcher die vorgenannte nickelpositive Elektrode durch das Aufkleben einer Paste gefertigt wird, welche das vorgenannte Nickelhydroxidpulver sowohl wie ein Lösungsmittel für das Austrocknen der vorgenannten aufgeklebten Paste beinhaltet.

8. Eine Sekundärbatterie nach Anspruch 7, bei welcher die vorgenannte Paste mindestens ein Material aus einer Gruppe beinhaltet, welche Kobalt, Kadmium, Zink und Magnesium innerhalb des vorgenannten Nickelhydroxidpulvers umfasst.

9. Eine Sekundärbatterie nach Anspruch 7, bei welcher die vorgenannte Paste weiter mindestens ein Material aus einer Gruppe beinhaltet, welche Yttrium, Ytterbium, Erbium, Indium, Antimon, Barium, Kalzium, und Beryllium umfasst.

10. Eine Sekundärbatterie nach Anspruch 7, bei welcher die vorgenannte Stütze aus einem Schaumnickel mit einer Reihe von Poren besteht, und bei welcher die vorgenannte Reihe von Poren des vorgenannten Schaumnickels mit dem vorgenannten Nickelhydroxidpulver gefüllt ist.

11. Eine Sekundärbatterie nach Anspruch 1, bei welcher die vorgenannte negative Elektrode aus einem wasserstoffspeichernden Material besteht.

12. Eine Sekundärbatterie nach Anspruch 1, bei welcher das vorgenannte Elektrolytmaterial aus einem alkalischen Elektrolyt besteht.

13. Eine Methode für das Herstellen einer nickelpositiven Elektrode für Sekundärbatterien, welche die folgenden Stufen umfasst:

(a) das Vorbereiten eines Nickelhydroxidpulvers mit einer Kristallinität, deren vollständige Breite der halben Maximalintensität der (001) Ebene der Röntgendiffraktionsspitze 0.69 Grad oder weniger beträgt, und wobei das vorgenannte Nickelhydroxidpulver über eine Kristallinität verfügt, deren "Spitzenstärkenwert/vollständige Breite der halbem Maximalintensität" der vorgenannten (001) Ebene 9,500 oder mehr beträgt,
(b) das Vorbereiten einer Paste, welche das vorgenannte Nickelhydroxidpulver und ein Lösungsmittel beinhaltet,
(c) das Halten der vorgenannten Paste auf einer leitfähigen Stütze, und
(d) das Trocknen der vorgenannten, auf der Stütze gehaltenen Paste.

14. Eine Methode für das Herstellen einer nickelpositiven Elektrode für die Sekundärbatterie nach Anspruch 13, bei welcher die vorgenannte Stufe des Vorbereitens eines Nickelhydroxidpulvers eine Stufe des Mischens einer wässerigen Nickelsulfatlösung, einer wässerigen Natriumhydroxidlösung, und Ammoniak umfasst.

15. Eine Methode für das Herstellen einer nickelpositiven Elektrode für die Sekundärbatterie nach Anspruch 13, bei welcher die vorgenannte Stufe des Vorbereitens eines Nickelhydroxidpulvers weiter die Stufe des Mischens einer (a) wässerigen Nickelsulfatlösung, (b) einer wässerigen Natriumhydroxidlösung, und (c) mindestens einem Sulfat aus einer Gruppe beinhaltet, welche Kobalt, Kadmium, Zink und Magnesium umfasst.

16. Eine Methode für das Herstellen einer nickelpositiven Elektrode für die Sekundärbatterie nach Anspruch 13, bei welcher die vorgenannte Paste der vorgenannten Stufe des Vorbereitens weiter mindestens ein Material aus einer Gruppe beinhaltet, welche Kobalt, Kalzium, Zink, und Magnesium umfasst.

17. Eine Methode für das Herstellen einer nickelpositiven Elektrode für die Sekundärbatterie nach Anspruch 13, bei welcher die vorgenannte Paste der vorgenannten Stufe des Vorbereitens derselben Paste weiter mindestens ein Material aus einer Gruppe beinhaltet, welche Kobalthydroxid, Kadmiumhydroxid, Zinkhydroxid, Magnesiumhydroxid, Kobaltoxid, Kadmiumoxid, Zinkoxid, und Magnesiumoxid umfasst.

18. Eine Methode für das Herstellen einer nickelpositiven Elektrode für die Sekundärbatterie nach Anspruch 13, bei welcher die vorgenannte Paste weiter mindestens ein Material aus einer Gruppe beinhaltet, welche eine Yttriummischung, eine Ytterbiummischung, eine Erbiummischung, eine Indiummischung, eine Antimonmischung, eine Bariummischung, eine Kalziummischung, und eine Berylliummischung umfasst.

**19.** Eine Methode für das Herstellen einer nickelpositiven Elektrode für die Sekundärbatterie nach Anspruch 13, bei welcher die vorgenannte Paste der vorgenannten Stufe des Vorbereitens derselben Paste weiter mindestens ein Material aus einer Gruppe beinhaltet, welche $Y_2O_3$, $Y(OH)_3$, $Er_2O_3$, $IN_2O_3$, $Sb_2O_3$, $BaSO_4$, $CaOH_2$, und BeO umfasst.

**20.** Eine Methode für das Herstellen einer nickelpositiven Elektrode für die Sekundärbatterie nach Anspruch 13, bei welcher die vorgenannte Stütze der vorgenannten Stufe (c) aus einem Schaumnickel mit einer Reihe von Poren besteht, und wobei die vorgenannten Poren des vorgenannten Schaumnickels mit der vorgenannten Paste gefüllt sind.

**Revendications**

**1.** Batterie secondaire comprenant :

une électrode positive en nickel, une électrode négative et un matériau électrolytique,

dans laquelle l'électrode positive négative nickel contient de la poudre d'hydroxyde de nickel dont la cristallinité de pleine largeur d'une demi-intensité maximale de plan (001) dans la pointe de diffraction rayons X est inférieure ou égale à 0,69 degré et la poudre d'hydroxyde de nickel est cristalline, avec la valeur de 'niveau de pointe/pleine largeur de demi-intensité maximale' dudit plan (001) étant supérieure ou égale à 9.500.

**2.** Batterie secondaire selon la revendication 1, dans laquelle ladite poudre d'hydroxyde de nickel est pratiquement de forme sphérique.

**3.** Batterie seconde selon la revendication 1, dans laquelle ladite électrode positive en nickel comprend :

(a) ladite poudre d'hydroxyde de nickel, et
(b) au moins un élément sélectionné parmi le groupe composé de cobalt, de cadmium, de zinc et de magnésium incorporé dans ladite poudre d'hydroxyde de nickel.

**4.** Batterie seconde selon la revendication 1, dans laquelle ladite électrode positive en nickel comprend :

(a) ladite poudre d'hydroxyde de nickel, et
(b) au moins un élément sélectionné parmi le groupe composé d'yttrium, d'ytterbium, d'erbium, d'indium, d'antimoine, de baryum, de calcium et de béryllium.

**5.** Batterie seconde selon la revendication 1, dans laquelle ladite électrode positive en nickel comprend :

(a) ladite poudre d'hydroxyde de nickel,
(b) au moins un élément sélectionné parmi le groupe composé de cobalt, de cadmium, de zinc et de magnésium incorporé dans ladite poudre d'hydroxyde de nickel, et
(c) au moins un élément sélectionné parmi le groupe composé d'yttrium, d'ytterbium, d'erbium, d'indium, d'antimoine, de baryum, de calcium et de béryllium.

**6.** Batterie secondaire selon la revendication 1, dans laquelle ladite électrode positive en nickel comprend un support conducteur, et ladite poudre d'hydroxyde de nickel posée sur ledit support.

**7.** Batterie secondaire selon la revendication 6, dans laquelle la fabrication de ladite électrode positive en nickel consiste à coller de la pâte contenant ladite poudre d'hydroxyde de nickel et du solvant sur ledit support, et à sécher ladite pâte collée.

**8.** Batterie secondaire selon la revendication 7, dans laquelle ladite pâte contient au moins un élément sélectionné parmi le groupe composé de cobalt, de cadmium, de zinc et de magnésium incorporé dans ladite poudre d'hydroxyde de nickel.

**9.** Batterie secondaire selon la revendication 7, dans laquelle ladite pâte contient au moins un élément sélectionné parmi le groupe composé d'yttrium, d'ytterbium, d'erbium, d'indium, d'antimoine, de baryum, de calcium et de béryllium

**10.** Batterie secondaire selon la revendication 7, dans laquelle ledit support est un nickel de mousse ayant plusieurs pores, et lesdites multiples pores dudit nickel en mousse sont remplies de ladite poudre d'hydroxyde de nickel.

**11.** Batterie secondaire selon la revendication 1, dans laquelle ladite électrode négative est un matériau de stockage hydrogène.

**12.** Batterie secondaire selon la revendication 1, dans laquelle ledit matériau électrolytique est un électrolyte alcalin.

**13.** Procédé de fabrication d'électrode positive en nickel pour batterie secondaire comprenant les phases suivantes :

(a) préparation de poudre d'hydroxyde de nickel ayant une cristallinité dont la pleine largeur d'une demi-intensité maximale de plan (001) dans la pointe de diffraction rayons X est inférieure ou égale à 0,69 degré, dans laquelle la poudre d'hydroxyde de nickel est cristalline, avec la valeur de 'niveau de pointe/pleine largeur de demi-intensité maximale' dudit plan (001) étant supérieure ou égale à 9.500,
(b) préparation de pâte contenant ladite poudre d'hydroxyde de nickel et ledit solvant,
(c) disposition de ladite pâte sur un support conducteur, et
(d) séchage de ladite pâte disposée sur ledit support.

**14.** Procédé de fabrication d'électrode positive de nickel pour batterie secondaire de la revendication 13, dans lequel ladite phase de préparation de poudre d'hydroxyde de nickel consiste à mélanger une solution aqueuse de sulfate de nickel, une solution aqueuse d'hydroxyde de sodium et de l'ammoniac.

**15.** Procédé de fabrication d'électrode positive de nickel pour batterie secondaire de la revendication 13, dans lequel ladite phase de préparation de poudre d'hydroxyde de nickel consiste à mélanger (a) une solution aqueuse de sulfate de nickel, (b) une solution aqueuse d'hydroxyde de sodium et (c) au moins un sulfate sélectionné dans le groupe composé de cobalt, de cadmium, de zinc et de magnésium.

**16.** Procédé de fabrication d'électrode positive de nickel pour batterie secondaire de la revendication 13, dans lequel ladite pâte dans ladite phase de préparation de pâte comprend en outre au moins un élément sélectionné parmi le groupe composé de cobalt, de cadmium, de zinc et de magnésium.

**17.** Procédé de fabrication d'électrode positive de nickel pour batterie secondaire de la revendication 13, dans lequel ladite pâte dans ladite phase de préparation de pâte comprend en outre au moins un élément sélectionné parmi le groupe composé d'hydroxyde de cobalt, d'hydroxyde de cadmium, d'hydroxyde de zinc, d'hydroxyde de magnésium, d'oxyde de cobalt, d'oxyde de cadmium, d'oxyde de zinc et d'oxyde de magnésium.

**18.** Procédé de fabrication d'électrode positive de nickel pour batterie secondaire de la revendication 13, dans lequel ladite pâte dans ladite phase de préparation de pâte comprend en outre au moins un élément sélectionné parmi le groupe comprenant un composé d'yttrium, un composé d'ytterbium, un composé d'erbium, un composé d'indium, un composé d'antimoine, un composé de baryum, un composé de calcium et un composé de béryllium.

**19.** Procédé de fabrication d'électrode positive de nickel pour batterie secondaire de la revendication 13, dans lequel ladite pâte dans ladite phase de préparation de pâte comprend en outre un élément sélectionné dans le groupe composé de $Y_2O_3$, $Y(OH)_3$, $Er_2O_3$, $IN_2O_3$, $Sb_2O_3$, $BaSO_4$, $CaOH_2$ et $BeO$.

**20.** Procédé de fabrication d'électrode positive en nickel pour batterie secondaire selon la revendication 13, dans lequel à ladite phase (c),

F i g . 1

$Ni\begin{smallmatrix} OH \\ OH \end{smallmatrix}$ →

4.6 A

$\beta - Ni(OH)_2$

F i g . 2

Fig. 3

Fig. 4

```
┌──────────────────┐ ┌──────────────────┐ ┌──────────────────┐ ┌──────────────────┐
│ SO₄ salt of Co,  │ │ NiSO₄ aqueous    │ │ NaOH aqueous     │ │ Complexing agent │
│ Cd, Zn, Mg, etc. │ │ solution         │ │ solution         │ │ (NH₄OH)          │
└──────────────────┘ └──────────────────┘ └──────────────────┘ └──────────────────┘
```

SO₄ salt of Co, Cd, Zn, Mg, etc.

NiSO₄ aqueous solution

NaOH aqueous solution

Complexing agent (NH₄OH)

**Mix.**

**Chemical reaction**
(pH regulation, temperature adjustment)

Additives

Y, Er, In, Sb,
Ba, Ca, Be,
their oxides,
their hydroxides,
their compounds

Additives

Co, Cd, Zn, Mg,
their oxides,
their hydroxides,
etc.

Nickel hydroxide powder, or
nickel hydroxide powder
incorporating Co, Cd, Zn, Mg

Ni (OH)₂

Spherical shape
Full width of half maximum
intensity ≦ 0.69 degree
Peak strength/full width
of half maximum intensity
≧ 9500

Solvent
(water)

Conductive support

Paste

Support paste on conductive support.

Dry paste.

Press or roll.

Nickel positive electrode